# EUROPÄISCHE PATENTSCHRIFT

(11) **EP 2 686 126 B1**
(45) Veröffentlichungstag und Bekanntmachung des Hinweises auf die Patenterteilung: **06.06.2018**
(21) Anmeldenummer: 12713622.4
(22) Anmeldetag: 12.03.2012
(51) Int. Cl.: B23H 3/04, B23H 9/14, B23H 7/28, B23H 9/16

(54) **VERFAHREN UND VORRICHTUNG ZUM ELEKTROCHEMISCHEN BEARBEITEN VON WERKSTÜCKEN**
PROCESS AND APPARATUS FOR ELECTROCHEMICALLY MACHINING WORKPIECES
PROCÉDÉ ET DISPOSITIF D'USINAGE ÉLECTROCHIMIQUE DE PIÈCES

(30) Priorität: 17.03.2011 DE 102011014364
(43) Veröffentlichungstag der Anmeldung: 22.01.2014
(60) Teilanmeldung: 16194065.5
(73) Patentinhaber: Stoba Sondermaschinen GmbH, 87700 Memmingen (DE)
(72) Erfinder: GÜNTHER, Oliver, 88450 Berkheim (DE); HÖG, Thomas, 87733 Markt Rettenbach (DE); KONIETZNI, Hans-Joachim, 87700 Memmingen (DE)
(74) Vertreter: Winter, Brandl, Fürniss, Hübner, Röss, Kaiser, Polte - Partnerschaft mbB
(86) Internationale Anmeldenummer: PCT/EP2012/054288
(87) Internationale Veröffentlichungsnummer: WO 2012/123421

(56) Entgegenhaltungen:
- EP-A1- 1 629 922
- EP-A2- 1 535 686
- DD-A3- 135 974
- DE-A1- 10 042 612
- US-A- 4 374 313
- US-A1- 2006 231 530
- US-B2- 6 717 094

## Beschreibung

Die Erfindung betrifft ein Verfahren und eine Vorrichtung zur elektrochemischen Bearbeitung von Werkstücken wie zum Beispiel Düsen. Die Werkstücke können dabei im ungehärteten Zustand oder gehärteten Zustand ohne oder mit schon eingebrachten Spritzlöchern bearbeitet werden.

Düsen der in Rede stehenden Art werden häufig in Verbrennungskraftmaschinen, insbesondere bei der Herstellung von Dieselmotoren benötigt. Derartige Düsen zeichnen sich dadurch aus, dass sie in einem Grundkörper eine Bohrung aufweisen. Diese Bohrung ist beispielsweise als Sacklochbohrung ausgeführt. Sacklochdüsen für Dieselmotoren gibt es in unterschiedlichen Ausführungen. So ist beispielsweise ein konisches oder auch ein zylindrisches Sackloch möglich. Des Weiteren unterscheidet man auch noch zwischen einem Sitzloch und einem Sackloch. Bei Sacklochdüsen ist es so, dass die eigentlichen Öffnungen für den Austritt des Kraftstoffes in dem Verbrennungsraum nicht direkt im Zentrum bzw. am Grund des Sackloches sich befinden, sondern vielmehr am oberen Rand des Sackloches. Meist sind sie dort kranzförmig am Umfang vorgesehen. Zumindest ist jedoch eine Austrittsdüse als Bohrung vorhanden. Des Weiteren ist es auch noch möglich, Sacklochdüsen derart zu verwenden, dass man sie sozusagen als Druckspeicher verwendet, in dem der eigentliche Kraftstoffaustritt in dem Sackloch entsprechend geregelt wird, die Austrittsdüse sich allerdings nicht in dem Sackloch, sondern in einer separaten Düse befindet. Hier wird sozusagen das Sackloch als Druckspeicher beispielsweise verwendet. Sacklöcher der in Rede stehenden Art sind im Durchmesser circa 0,5 bis maximal 1 mm, in der Regel jedoch 0,8 mm.

Die Bearbeitung der Bohrung selbst bereitet regelmäßig keine Schwierigkeiten, da diese mit entsprechenden mechanischen Bearbeitungsverfahren ausreichend genau bearbeitet werden können. Auch ist ein Schleifen und insbesondere ein anschließendes Vergüten mit den dazu bekannten Bearbeitungsverfahren ohne weiteres möglich. Probleme bereiten regelmäßig Düsen, die mit einer Sacklochbohrung versehen sind, deren Düsensack sich am Boden bzw. am Grund der Sackbohrung befindet. Diese lässt sich mit herkömmlichen Bearbeitungsmethoden nicht so bearbeiten, dass sie eine ausreichende Oberflächengenauigkeit und/oder Vergütung aufweist. Das Problem der mechanischen Bearbeitung ist auch, dass die für die Sackbohrung inzwischen fertiggestellte Oberfläche nicht mehr beschädigt werden darf, wenn die Sackbohrung bearbeitet werden soll. Auch gibt es keine ausreichend mechanische Bearbeitungsmöglichkeit, um die Oberflächenungenauigkeiten in Form von im Material befindlichen Aus- bzw. Aufreißungen, leichteren Erhebungen oder Senken zu beseitigen bzw. zu glätten. Ergebnisse, die mit einer Bearbeitungsmethode, nämlich dem Coinen, erzielt wurden, sind ebenfalls unzureichend gewesen. Die Rauigkeit des Sackloches bzw. Düsensackes wurde trotz eines recht hohen Aufwandes nur geringfügig verringert. Die elektrochemische Bearbeitung solcher Düsen bzw. Sackbohrungen von Düsen im Düsensack war bisher auch noch nicht von Erfolg gekennzeichnet, da mit den bekannten Kathoden die Flächen nicht bearbeitbar waren. Die Kathode, die den Elektrolytfluss direkt auf die zu bearbeitende Fläche leitet, führt dazu, dass an dieser Stelle ein entsprechender Abtrag erfolgt, eine vollständige Bearbeitung des Düsensackes ist mit elektrochemischen Verfahren bisher allerdings nicht möglich gewesen. Aufgrund der unterschiedlichen Ausbildung der Düsensäcke ist die jeweils angepasste Herstellung bezogen auf die zu bearbeitende Fläche jeweils notwendig und daher sehr kostenaufwendig.

Aus der Druckschrift DE 10 2004 054 587 B1 ist ein Verfahren zur Herstellung von reproduzierbaren Mikrobohrungen sowie eine Vorrichtung dafür bekannt. Hierbei wird eine reproduzierbare Mikrobohrung mit bestimmten hydraulischen Eigenschaften mittels elektrochemischer Prozesse in einer Lage in einem Werkstück hergestellt, in der bereits eine Vorbohrung existiert. Diese Vorbohrung hat einen geringeren Durchmesser, als die spätere Mikrobohrung. Außerdem handelt es sich hierbei nicht um eine Sack- bzw. Sacklochbohrung, sondern um eine Durchgangsbohrung. Die Kathode wird dabei an dem vorgefertigten Sackloch angestellt und bewegt sich bei Beaufschlagung mit einem Elektrolyt und elektrischem Strom dann in einer definierten Geschwindigkeit durch die Elektrode. Eine Drehbewegung der Kathode ist in dieser Druckschrift nicht offenbart.

Aus der Druckschrift DE 103 12 986 ist ein Verfahren und eine Vorrichtung zum elektroerosiven Bearbeiten von Löchern beschrieben. Hier geht es darum, ein bereits vorgebohrtes Loch elektroerosiv zu bearbeiten. Demzufolge wird auch hier eine im Durchmesser kleine vorgefertigte Bohrung, die durch mechanische Bearbeitung erhalten wurde, auf ein Endmaß elektroerosiv bearbeitet. Das elektroerosive Verfahren ist dadurch charakterisiert, dass der Materialabtrag mittels einer Folge nichtstationärer elektrischer Entladungen erzielt wird, die zeitlich voneinander getrennt sind, das heißt, dass nur ein einziger Funken auf einmal entsteht. Die Entladungen werden durch Spannungsquellen von über 200 Volt erzeugt und finden stets in einem dielektrischen Bearbeitungsmedium statt. Im Gegensatz zur elektro-chemischen Bearbeitung, wo ein Elektrolyt als Flüssigkeit verwendet wird, wird bei der elektroerosiven Bearbeitung ein Dielektrikum, also eine nichtleitende Flüssigkeit vorgesehen. Weiterer Nachteil der elektroerosiven Bearbeitung ist der, dass die Werkzeuge hier mit der Zeit ebenfalls erodiert, das heißt abgetragen, werden. Dies ist bei der elektrochemischen Bearbeitung zum Beispiel nicht der Fall. Des Weiteren soll die Bohrung von oben nach unten gesehen konisch ausgeführt werden. Die Bearbeitung von Sacklöchern bzw. dem Sack eines Sackloches ist in dieser Druckschrift ebenfalls nicht offenbart. Mit einer solchen Lösung ist das Bearbeiten von Sacklöchern nicht möglich.

Aus der Druckschrift DD 135 974, die als nächstliegender Stand der Technik angesehen werden kann, sind ein Verfahren und eine Vorrichtung zum elektrochemischen Abtragen von Metall bekannt. Diese Lösung dient allerdings zum elektrochemischen Abtragen von Metall zur Bearbeitung von Werkstücken, die rotationssymmetrisch ausgebildet sind. Dabei ist die Werkzeugelektrode als Topf ausgebildet und Topf und Werkstück rotieren. Die Elektrolytlösung wird drucklos zugeführt, wodurch an zumindest einer Seite des zu bearbeitenden Werkzeuges ein geringerer Spalt gebildet wird, an dem die Abtragung von Material erfolgen kann.

Des Weiteren ist aus der DD 97 368 aus dem Jahr 1972 eine Vorrichtung zur elektrochemischen Metallbearbeitung, insbesondere zum Schlitzen und Trennen, mit Zuführung des Elektrolyten unter Druck und Fremdantrieb der Kathode bekannt. Hier ist beschrieben, dass die Kathode im Inneren einen Kanal aufweist, der das Fluid aufnimmt. Des Weiteren sind strahlenförmig verlaufende Verteilungsbohrungen beschrieben.

In der US 2004/0 124 078 A1 wird eine elektrochemische Bearbeitung von Flugzeugturbinenrädern beschrieben. Dabei wird auch das Werkzeug, nämlich die Kathode, in eine Drehbewegung versetzt. Die elektrochemische Flüssigkeit wird allerdings von außen auf die Kathode aufgespritzt, wodurch offensichtlich die Bearbeitung an der Oberfläche der Turbinenflügel erfolgt. Eine Bearbeitung von Sacklöchern bzw. Sacklochdüsen ist dieser Vorrichtung ebenfalls nicht zu entnehmen. Aus dem Dokument EP 1 535 686 A2 ist ein Verfahren und eine Vorrichtung zur Oberflächenbearbeitung von Bohrungen, wie Sacklochbohrungen, bekannt. Benachbarter Stand der Technik ist auch aus der EP 1 629 922 A1 bekannt. Ausgehend von diesem Stand der Technik ist es Aufgabe der Erfindung,ein Verfahren und eine Vorrichtung zur Verfügung zu stellen, mit der eine elektrochemische Bearbeitung von Werkstücken, insbesondere von Düsen mit Sackbohrungen sowie ein hochgenauer Abtrag kostengünstiger als im Stand der Technik und mit hoher Genauigkeit ermöglicht wird.

Die Erfindung geht von dem zuvor beschriebenen Stand der Technik aus und schlägt ein Verfahren nach Patentanspruch 1 vor. Die Erfindung betrifft auch eine Vorrichtung gemäß Patentanspruch 9. Nach der Erfindung wird eine Kathode, die beispielsweise in einer Halterung gelagert ist, in ein in einer Spannvorrichtung gehaltenes Werkstück eingeführt. Die Kathode hat in ihrem Inneren wenigstens einen Kanal, durch den Elektrolytflüssigkeit bis zum Sack der Bohrung geführt werden kann. Durch die Drehbewegung wird es ermöglicht, dass der Sack der Sackbohrung durch Beaufschlagung durch Elektrolyt bei gleichzeitiger Drehung der Kathode und des Werkstückes, bevorzugt gegensinnig drehgerichtet erfolgen kann. Hierbei reicht es aus, innerhalb einer recht kurzen Zeitdauer eine elektrochemische Bearbeitung des Düsensackes vorzunehmen, ohne dass die bereits vergüteten Oberflächen der Düse, insbesondere der Sackbohrung beschädigt werden.

Des Weiteren werden die gewünschten Ergebnisse des Abtrags und insbesondere der Glättung des Düsensackes erreicht, so dass beim späteren bestimmungsgemäßen Einsatz der Düse eine höhere Druckfestigkeit bei besserem Durchfluss erreicht wird. Durch die Oberflächenglättung kann demzufolge auch der Kraftstoffverbrauch von Verbrennungsmotoren weiter reduziert werden. Indem sowohl das Verfahren, als auch die Vorrichtung zum elektrochemischen Bearbeiten von Werkstücken jetzt eine Möglichkeit geschaffen haben, die Sackbohrung bzw. deren Sack abschließend mit relativ geringem Aufwand im Vergleich zum Stand der Technik zu bearbeiten, wird erreicht, dass die bei der mechanischen Bearbeitung aufgetretenen Ungenauigkeiten komplett durch die elektrochemische "Nachbearbeitung" beseitigt werden können. Eine aufwendige Anfertigung jeweils bezogen auf den Anwendungsfall geeigneter Kathoden ist jetzt nicht mehr notwendig und ungenaue mechanische Bearbeitungsverfahren sind nicht mehr nötig. Die Ausschussquote bei der Herstellung entsprechender Düsen wird auf nahezu Null reduziert.

Durch die elektrochemische Bearbeitung, wie zuvor beschrieben, wird ein Materialabtrag von etwa 40 µm erreicht. Da der Sack der Sacklochdüse einen Durchmesser von 0,8 mm maximal aufweist, ist natürlich das Problem, dass man die Elektrolytflüssigkeit bis zum Düsensack bringen muss, gegeben. Dies wird durch die Erfindung gelöst, indem die Kathode mindestens einen Kanal hat, der die Elektrolytflüssigkeit in den Düsensack hineindrückt. Dazu wird ein Systemdruck von 5 bis 10 bar etwa vorgesehen. Durch das Beaufschlagen mit Elektrolytflüssigkeit gelangt diese in den Düsensack, was auch notwendig ist, um eine elektrochemische Bearbeitung überhaupt zu ermöglichen. Durch die Drehbewegung von Werkstück und Kathode wird die Elektrolytflüssigkeit gleichmäßig im Düsensack verteilt, sodass die Oberfläche zumindest überall benetzt ist. Aufgrund der Abmaße kann man sich vorstellen, dass nicht sehr viel Platz für die Abführung des verbrauchten Elektrolyten besteht und insbesondere auch sichergestellt werden muss, dass Elektrolytflüssigkeit eben in den Düsensack gelangt. Dies gelingt dadurch, dass die Kathode einen im inneren der Kathode sich befindlichen Kanal aufweist, der die Elektrolytflüssigkeit gleichmäßig über die gesamte Oberfläche des Düsensackes zu verteilen vermag. Bevorzugt ist es dabei natürlich, wenn die Austrittsöffnung für die Elektrolytflüssigkeit in der Kathode etwas nach außen zum Rand des Düsensackes zugewandt abgewinkelt ist, sodass sie nicht genau zentrisch auf den Düsensack gelangt, sondern seitlich dorthin, wo die eigentlich kritischen Bereiche des Abtrages sind. Durch das Versetzen von Kathode und Werkstück in eine insbesondere gegensinnige Drehbewegung wird auch ein weiteres Problem beseitigt, nämlich das Genauigkeitsproblem. Selbst bei genauester Zentrierung, das heißt beim exakten Anfahren und Abmessen der Kathode in den Düsensack kann es vorkommen, dass ein leicht exzentrischer Düsensack entsteht, weil eben die Kathode nicht exakt zentrisch positioniert ist. Dreht man jetzt das Werkstück und die Kathode gleichzeitig, insbesondere gegensinnig oder mit unterschiedlicher Geschwindigkeit gleichsinnig, werden die beiden Drehbewegungen überlagert und gegebenenfalls vorhandene Ungenauigkeiten ausgeglichen, sodass ein genau kreisrundes Düsensackloch entsteht.

Für den Beginn der elektrochemischen Bearbeitung ist es beispielsweise ausreichend, wenn ein Tropfen Elektrolyt in die Sackbohrung gelangt. Dies kann selbstverständlich auch so erfolgen, dass man beim Einführen der Kathode gegebenenfalls kurz den Elektrolytfluss in Gang setzt um dann die Kathode zu zentrieren. Ist die Kathode dann zentriert, kann man sie bei gleichzeitigem Beginn der Drehbewegungen von Kathode und Werkstück mit Strom beaufschlagen und den Elektrolytfluss selbstverständlich ebenfalls mit Druck beaufschlagen. So ist dann ein genaues Bearbeiten möglich. Die Erfindung ist allerdings auf diese Verfahrensweise nicht eingeschränkt. Vielmehr ist es mit der Erfindung auch möglich, den Elektrolytfluss erst zu beaufschlagen, wenn die Kathode genau zentriert ist.

Ein weiterer Vorteil wird durch die neuartige Verfahrensweise erreicht, indem nämlich ein Übergangsbereich, der sich beispielsweise zwischen dem Sackloch und der eigentlichen Düsenausgangsbohrung befindet, sehr genau bearbeitet werden kann. Im Stand der Technik war es bisher so, dass hier sozusagen gewisse bügelartige Erhebungen sich noch am Ausgang des Sackloches in Richtung der Düsenausgangsbohrung befanden. Mit Hilfe des neuartigen Verfahrens ist es jetzt möglich, auch diese Bereiche noch so zu glätten, dass auch hier ein wesentlich günstiger Strömungsverlauf beim bestimmungsgemäßen Einsatz der Düse erhalten wird.

Von Vorteil ist es auch, wenn speziell dafür, aber auch zur eventuellen Nachbearbeitung des Düsensackes selbst, die elektrochemische Bearbeitung durch elektrochemisches Senken ergänzt wird. Bevorzugt kann man dazu selbstverständlich dann noch eine lineare Bewegung der Drehbewegung überlagern, sodass bei gleichzeitiger Beaufschlagung mit Strom und Elektrolyt hier eine elektrochemische Bearbeitung kombiniert mit elektrochemischem Senken erfolgen kann.

Gegenüber dem Stand der Technik, wie er eingangs beschrieben wurde, ergibt es sich, dass beispielsweise in der DE 10 2004 054 587 eine Lösung aufgezeigt ist, bei der eine Relativbewegung zwischen Werkzeug und Werkstück vorgesehen ist. Allerdings wird in dieser Lösung eine beispielsweise Laserbohrung vor der elektrochemischen Bearbeitung in das Werkstück eingebracht und durch die elektrochemische Bearbeitung auf das gewünschte Maß "aufgebohrt". Gerade dies ist mit der erfindungsgemäßen Lösung nicht gewollt, da hierbei in der Regel in der vorgefertigten Bohrung, die mechanisch oder durch Lasern oder anderweitig erhalten wurde, bereits eine vollkommend ausreichende Glättung vorhanden ist, die insbesondere vergütet ist. Die Vergütung soll erhalten bleiben, damit keine erneute Nachbehandlung erfolgen soll. Des Weiteren ist es mit dieser Lösung definitiv nicht möglich, im Sackbereich befindliche Rauheiten bzw. Ungenauigkeiten durch eine elektrochemische Bearbeitung zu beheben. Bei der Lösung nach der DE 10 2004 054 587 kann die Elektrolytflüssigkeit durch die vorgefertigte Durchgangsbohrung austreten, ohne dass eine Bearbeitung in einem "Sackbereich" erfolgen muss oder kann. Des Weiteren ist das Abführen der Elektrolytflüssigkeit in Richtung der Kathode überhaupt nicht vorgesehen. Eine zielgenaue elektrochemische Bearbeitung ist insbesondere in den kritischen Bereichen nicht möglich. Eine gleichsinnige oder entgegengesetzte Drehrichtung von Kathode und Werkzeug ist dieser Druckschrift ebenfalls nicht zu entnehmen, so dass durch die erfindungsgemäße Lösung jetzt erst Möglichkeiten zur Verfügung gestellt werden, um die Bearbeitung von Sacklochbohrungen bzw. Sacklochdüsen im gewünschten Maße vornehmen zu können. Hierbei wird ein Materialabtrag von etwa 40 bis 50 µm erreicht. Dies ist im Vergleich zur Lösung, wie sie in der DE 10 2004 054 587 vorgestellt ist, ein recht geringes Maß, was eine hochgenaue Bearbeitung erfordert.

Auch in der DE 103 12 986 ist kein Hinweis darauf enthalten, ein Sackloch elektrochemisch zu bearbeiten. Vielmehr sind hier ein elektroerosives Verfahren und auch hier eine vorgefertigte Bohrung als Durchgangsbohrung vorgesehen, die von oben nach unten konisch ausgeführt werden soll. Dazu wird das Bearbeitungswerkzeug innerhalb der Elektrodenführung elastisch deformiert. Würde man dies beispielsweise bei einer Sacklochdüse so praktizieren, würde dies automatisch zu einem Kurzschluss führen. Auch könnte man den Grund des Sackloches, nämlich den eigentlichen Sack, mit einer Lösung nach der DE 103 12 986 überhaupt nicht bearbeiten, weil hier eine elektroerosive Bearbeitung erfolgt. Die weiteren bekannten Druckschriften des Standes der Technik beschreiben alle eine Lösung, mit der beispielsweise eine Bearbeitung eines Sackloches in einer Sacklochdüse nicht möglich ist. Demzufolge wird erst durch die Erfindung eine Lösung zur Verfügung gestellt, mit der die äußerst genaue Bearbeitung eines Sackloches, insbesondere im Sackbereich, also im eigentlichen Bereich, in dem die Düsenbohrungen angeordnet sind und in dem die Strömungsverhältnisse des Kraftstoffes aktiv zu beeinflussen sind, möglich. Dabei kann der Prozess beliebig oft, das heißt an beliebig vielen Düsensäcken wiederholt werden, ohne, dass das Werkzeug beschädigt oder abgenutzt wird.

Entsprechend einer Weiterbildung der Erfindung zeichnet sich das Verfahren dadurch aus, dass das Werkstück mittels einer Spannvorrichtung in einer Vorrichtung zur elektrochemischen Bearbeitung eingespannt und als Anode gepolt wird. Dabei wird die Kathode für die Bearbeitung zu einer der Kontur des Werkstückes bzw. der zu bearbeitenden Sackbohrung in etwa angepasst. Die Kathode wird anschließend in der Sackbohrung zentriert und eine Elektrolytflüssigkeit in wenigstens einen in der Kathode vorgesehenen Strömungskanal zur Kathodenspitze geleitet. Vorteilhafterweise wird die Elektrolytflüssigkeit seitlich in Richtung auf die zu bearbeitende Fläche ausgeleitet und das Werkstück und/oder die Kathode bei gleichzeitiger Beaufschlagung mit Elektrolytflüssigkeit und Strom in eine Drehbewegung versetzt. Durch diese Maßnahme gelingt es, den Elektrolytstrom gleichmäßig über die gesamte Oberfläche des Düsensackes zu verteilen und einen insbesondere gleichmäßigen Abtrag zu erhalten. Außerdem gelingt es durch die Drehbewegung, Ungenauigkeiten der Sackbohrung selbst durch die elektrochemische Bearbeitung auszugleichen und die gesamte Oberfläche von oben betrachtet als Kreis gleichmäßig abzutragen und/ oder zu bearbeiten. Die Oberfläche des Sackes der Sackbohrung ist anschließend sehr gleichmäßig geglättet.

Nach der Erfindung ist die Kathode der Kontur der Sacklochbohrung angepasst und in etwa nadelförmig ausgebildet und besitzt eine Spitze. An der zum Beispiel kegelförmig auslaufenden Spitze der Kathode wird die Elektrolytflüssigkeit seitlich und bezogen auf die Symmetrieachse der Kathodenspitze abgewinkelt auf die zu bearbeitende Fläche gelenkt. Auch dies dient insbesondere der Ausbildung eines nach der Bearbeitung von oben betrachtet idealisierten Kreises des Düsensackes. Insbesondere führt dies auch dazu, dass - anders als bei herkömmlichen Verfahren - nicht nur die Spitze bzw. das Zentrum des Düsensackes bearbeitet sondern auch die seitlich befindlichen Flächen. Zudem werden Ungenauigkeiten der mechanischen Bearbeitung durch dieses elektrochemische Verfahren jetzt beseitigt. Demzufolge wird nach einer Weiterbildung der Erfindung die Elektrolytflüssigkeit so auf den Sack der Sackbohrung gelenkt, um die gesamte Sackkopffläche zu bearbeiten.

Bevorzugt werden die Kathode und/oder das Werkstück während des Bearbeitungsvorganges mit einer Geschwindigkeit von 20 bis 40 Umdrehungen pro Minute gedreht. Dabei spielt es keine Rolle, ob es eine gleichsinnige oder eine entgegengesetzte Drehbewegung von Kathode und Werkzeug gibt. Bevorzugt ist allerdings eine entgegengesetzte Drehrichtung von Kathode und Werkzeug vorgesehen oder Drehbewegungen in gleicher Richtung mit relativ unterschiedlichen Geschwindigkeiten.

Nach einer Variante des erfindungsgemäßen Verfahrens ist eine Bearbeitungsdauer von 2 s bis 30 s, bevorzugt von 5 s vorgesehen. Die zu bearbeitende Fläche wird beispielsweise während des Bearbeitungsvorganges in der Vorrichtung mit 30 bis 180 Ampere-Sekunden beaufschlagt. Der Prozessstrom wird dem Werkstück sowohl als Gleichstrom, pulsierender Gleichstrom mit hohen Spitzenstromdichten zugeführt. Das Puls/Pausenverhältnis wird so gewählt, dass eine genügende Wärmeabfuhr im Spalt erfolgt. Je nachdem, wie viel durch die elektrochemische Bearbeitung von der Fläche abgetragen werden soll, kann man dabei die Stromstärke und/oder den Elektrolytfluss bzw. -druck variieren. Des Weiteren ist es selbstverständlich auch möglich, die Zeitdauer der Bearbeitung entsprechend zu variieren.

Als Elektrolytflüssigkeit wird bevorzugt Natrium-Nitrat mit einer Konzentration von 5-30 Prozent, bevorzugt von 20 Prozent, verwendet. Als Prozessdruck für die Elektrolytflüssigkeit ist ein Druck von 5 bis 10 Bar vorgesehen. Diese Verwendung von Elektrolytflüssigkeit in Form von Natrium-Nitrat ist allerdings keineswegs einschränkend zu verstehen. Auch andere geeignete Elektrolytflüssigkeiten können mit dem erfindungsgemäßen Verfahren eingesetzt werden.

Durch den Elektrolytfluss wird das abgetragene Material (Hydroxid) ausgeleitet und gelangt in eine Aufbereitungsanlage, wo es gereinigt und gegebenenfalls aufbereitet wird, um es erneut einzusetzen.

In einer alternativen Variante des Verfahrens nach der Erfindung ist vorgesehen, dass die zu bearbeitende Fläche alternativ oder zusätzlich durch elektrochemisches Senken und/oder elektrochemisches Schleifen oder Polieren bearbeitet wird. Auch dies dient dazu, die Oberflächengenauigkeit und Oberflächengüte weiter zu erhöhen.

Um das Ergebnis der elektrochemischen Bearbeitung beurteilen zu können, schlägt die Erfindung in einer Weiterbildung vor, dass eine optische Prüfung, bevorzugt durch optisches Abfahren, durchgeführt wird, um bei gegebenenfalls nicht ausreichendem Abtrag an der zu bearbeitenden Fläche eine erneute Bearbeitung mit gegebenenfalls angepassten Parametern durchzuführen. Dabei wird beispielsweise eine Optik in Form einer Kamera oder in Form eines optischen Sensors auf die zu bearbeitende Fläche gerichtet, wobei die Fläche entweder komplett erfasst und aufgenommen wird oder aber ein Abfahren erfolgt, das heißt, dass man die Bearbeitung an der Fläche abschnittsweise überprüft. Aus dem Ergebnis des optischen Abfahrens kann dann geschlussfolgert werden, ob eine erneute Bearbeitung notwendig ist und ob dazu gegebenenfalls der Anstellwinkel der Düse oder die Bearbeitungsdauer, der Elektrolytdruck bzw. -fluss oder die Stromstärke des Puls/Pausen-Verhältnis oder die Pulsintensität verändert werden müssen.

Eine weitere vorteilhafte Weiterbildung schlägt vor, dass zur zerstörungsfreien Prüfung des Düsensacks vor der Bearbeitung ein Prüfkörper vom Inneren der Sackbohrung angefertigt wird.

Nach der Bearbeitung wird dann ein weiterer Prüfkörper vom Inneren der Sackbohrung angefertigt und beide Prüfkörper werden miteinander verglichen, um das Ergebnis der Bearbeitung zu prüfen. Dies ist eine hervorragende Vorgehensweise, um das Bearbeitungsergebnis beurteilen zu können. Der Vergleich kann dabei mit für solche Zwecke vorgesehenen Prüfvorrichtungen vorgenommen werden. Dabei ist es auch möglich, diese Prüfkörper entsprechend grafisch zu dokumentieren und zum Beispiel einen grafischen Vergleich durch Übereinanderlegen bzw. Überlagern der Flächen vorzunehmen.

Zur Anfertigung des/der Prüfkörper wird bevorzugt eine Schnellabformmasse verwendet. Diese ist beispielsweise für die Anfertigung von Zahnabdrücken aus der Dentaltechnik bekannt. Dazu wird beispielsweise Aginal verwendet. Diese Schnellabformmasse hat den Vorteil, dass ein schnelles Einfügen und insbesondere auch ein schnelles Aushärten der Masse erfolgt, wodurch sehr genaue Abdrücke angefertigt werden können. Die Masse hat äußerst geringe Schrumpfungseigenschaften. Das Entnehmen dieser Schnellabformmasse nach dem Aushärten ist auch problemlos, da es keine innige Verbindung mit der inneren Fläche der Sackbohrung und der bearbeiteten Fläche herstellt.

Selbstverständlich schlägt die Erfindung in einer Weiterbildung auch vor, dass eine Prüfung des Bearbeitungsvorganges mittels Magnetfeldmesstechnik oder Ultraschalltechnik vor und nach der Bearbeitung durchgeführt wird, um das Ergebnis der Bearbeitung zu beurteilen. Auch hier ist selbstverständlich eine entsprechende grafische Auswertung durch Überlagerung der Ergebnisse der Prüfung vor und nach der Bearbeitung vorgesehen.

Das Verfahren nach der Erfindung zeichnet sich gemäß einer Variante auch dadurch aus, dass zur Zentrierung der Kathode die Kathode selbst durch Annäherung nahe bei dem Sackloch der Düse positioniert wird. Es erfolgt zunächst eine lineare Annäherung, um die Kathode mit ihrer Spitze relativ nah bei dem Sackloch zu positionieren. Um nun auch eine Zentrierung bezüglich des Sackloches zu erreichen, wird die Kathode dann bezüglich der Symmetrieachse der Sackbohrung seitlich leicht verschwenkt und so an den idealen Durchmesser der Sackbohrung angenähert. Ist die Kathode für die Bearbeitung in diesem Sinne optimal zentrisch positioniert, kann die Bearbeitung erfolgen. Durch das Versetzen der Kathode in eine Drehbewegung während der Bearbeitung und/oder eine gleichzeitige Drehbewegung des Werkstückes werden insbesondere optimale Ergebnisse bei der Oberflächenbearbeitung erreicht und/oder eine Verbesserung der Zentrierung des Düsensacks relativ zur zentralen Achse der Bohrung.

Durch die Erfindung wird auch eine Vorrichtung zur elektrochemischen Bearbeitung von Werkstücken, wie zum Beispiel von Düsen, vorzugsweise mit einer Sackbohrung vorgeschlagen. Die vorgeschlagene Vorrichtung dient insbesondere zur Durchführung des Verfahrens wie vorher in den unterschiedlichsten Ausführungsformen und Varianten vorgestellt. Die Vorrichtung zeichnet sich dadurch aus, dass eine in einer Halterung drehbar gelagerte Kathode und eine drehbar gelagerte Spannvorrichtung für das Werkstück vorgesehen sind. Ansonsten ist die Vorrichtung zur elektrochemischen Bearbeitung ausgestattet bzw. ausgebildet, wie dies für die elektrochemische Bearbeitung üblich ist. So ist selbstverständlich eine Zuführung für die Elektrolytflüssigkeit genau so vorgesehen wie eine Abführung. Des Weiteren sind entsprechende Vorratsbehälter und Druckerzeuger für Elektrolytflüssigkeit vorhanden, wie auch eine Stromversorgung, um während der Bearbeitung entsprechende Stromstärken zur Verfügung zu stellen. Selbstverständlich sind für die Vorrichtung auch die entsprechenden Zustellmotoren bzw. Einrichtungen vorhanden. Dies kann beispielsweise ein Linearmotor sein. Es kann sich dabei jedoch auch um eine hydraulische Vorrichtung handeln, die die Kathode beispielsweise zustellt. Auch die Spannvorrichtung für das Werkstück ist in üblicher Weise ausgebildet. Nach der Erfindung ist allerdings sowohl die Kathode in oder mit der Halterung als auch die Spannvorrichtung oder das Werkstück in der Spannvorrichtung drehbar gelagert. Ein entsprechender Antrieb zur Erzeugung der Drehbewegung ist selbstverständlich ebenfalls von der Vorrichtung nach der Erfindung umfasst. Dabei kann ein gemeinsamer Antrieb genauso vorgesehen sein, wie getrennte Antriebe.

Der große Vorteil der drehbaren Lagerung entweder von Kathode oder von Spannvorrichtung oder aber von beiden wurde bei der Beschreibung des Verfahrens bereits ausführlich erläutert. Es gelingt durch diese drehbare Ausbildung nämlich, ein optimales Bearbeiten insbesondere einer Sackbohrung und hier insbesondere des Sackes einer Düse zu erhalten. Durch die drehbare Lagerung von Kathode und Spannvorrichtung gelingt es, die eingangs erwähnte Relativbewegung zu erzeugen.

Von Vorteil ist es auch, wenn Kathode und/oder Spannvorrichtung linear aufeinander zu bzw. voneinander weg bewegbar sind. Damit lässt sich die Kathode beispielsweise optimal in dem Düsensack positionieren. Diese Bewegbarkeit ist auch wichtig für die Positionierung der Kathode selbst, das heißt die Annäherung vor dem Bearbeitungsvorgang. Dabei wird ja, wie weiter vorn bereits beschrieben, die Kathode zunächst in die Sackbohrung eingeführt und linear in Richtung des Düsensackes zu bewegt. Kurz davor wird angehalten und gegebenenfalls nachgemessen bzw. geprüft, um dann noch in eine weitere Position vorzufahren. Zwischenzeitlich wird die Kathode und/ oder die Spannvorrichtung leicht von der Symmetrieachse der Kathode bzw. der Sackbohrer abweichend so verfahren oder verschwenkt, dass sie an dem Inneren der Sackbohrung anliegt. Dann erfolgt eine Verschwenkung bzw . ein Verfahren nach der anderen Seite. Durch Zentrierung der in X- und Y-Richtung abgetasteten Werte kann die Kathode dann optimal positioniert werden. Das Verfahren funktioniert sowohl mit einer bezüglich der Symmetrieachse verfahr- bzw. verschwenkbaren Kathode, aber auch mit einer entsprechend verfahr- bzw. verschwenkbaren Spannvorrichtung. Die Linearbewegung ist insbesondere für das Zustellen der Kathode in dem Werkstück notwendig.

Die Erfindung zeichnet sich dadurch aus, dass gemäß einer Weiterbildung im Inneren der Kathode wenigstens ein Strömungskanal für die Elektrolytflüssigkeit mit wenigstens einer Austrittsöffnung an bzw. in der Nähe der Spitze der Kathode an bzw. auf der dem zu bearbeitenden Werkstück zugewandten Seite vorgesehen ist. Die Austrittsöffnung ist dabei bezüglich der Symmetrieachse der Kathode nach außen weisend und bezüglich der Senkrechten abgewinkelt vorgesehen. Dadurch wird bewirkt, dass nicht nur das Zentrum der Sackbohrung bzw. des Düsensackes bearbeitet wird, sondern auch die weiter außen liegenden Flächenbereiche des Düsensackes. Durch eine schräge, das heißt bezüglich der Symmetrieachse abweichende Austrittsöffnung für die Elektrolytflüssigkeit wird eine insgesamt homogenere und gleichmäßigere Bearbeitung erreicht. Eine besonders bevorzugte Ausgestaltung sieht vor, dass in der Kathode zwei Strömungskanäle mit jeweils einer eigenen Austrittsöffnung für die Elektrolytflüssigkeit vorgesehen sind. Dabei ist es weiterhin günstig, wenn an jeder der Austrittsöffnungen für die Elektrolytflüssigkeit an bzw. in der Nähe der Spitze Führungsnuten bzw. Führungsrillen vorgesehen sind, die den Elektrolytfluss in gewünschter Richtung auf die zu bearbeitende Werkstückfläche lenken und/oder verteilen. Auch dies dient insgesamt der gleichmäßigeren Bearbeitung, das heißt einem gleichmäßigeren Abtrag von Material in dem Düsensack. Bevorzugt ist die Kathode in ihrem Durchmesser immer kleiner als der Durchmesser der Sacklochbohrung. Aufgrunddessen, dass die Kathode bei der elektrochemischen Bearbeitung sozusagen im Material abgebildet wird, ist es bevorzugt, dass die Kathode an ihrer dem Sackloch zugewandten Seite nicht spitz ausgebildet ist, sondern gerundet. Dabei erfolgt die Abrundung nur im vorderen, eigentlich spitzen Bereich der Kathode. Des Weiteren ist es natürlich auch möglich, dass man den Schwenkbereich bzw. Radius des Fahrens der Kathode größer wählt als den vorhandenen Radius. Dabei geht es beispielsweise darum, das Sackloch gegenüber der Bohrung zu erweitern. Man kann das Sackloch auch als Halbkugel ausbilden. In diesem Fall muss die Kathode drehend in den Sack hinein gesenkt werden. Bei ausgeglichenem Verhältnis der Senkgeschwindigkeit zur Abtragsgeschwindigkeit stellt sich ein Bearbeitungsspalt ein, der für den Abfluß des Elektrolyten ausreichend ist.

Günstig ist auch eine Lösung, bei der die Kathode vom Durchmesser her immer kleiner ist als der Durchmesser des Sackloches. Dies ist auch deshalb von Vorteil, weil man damit gleichzeitig einen ausreichenden Elektrolytabfluss gewährleisten kann, der bei passgleicher Ausbildung nicht mehr möglich ist.

Von weiterem Vorteil ist es, wenn die Kathode gemäß einer Weiterbildung in der Vorrichtung bezüglich der Bearbeitungsachse bzw. der Symmetrieachse der Sackbohrung im Werkstück verfahr- oder verschwenkbar ist. Die Vorteile dieser Ausgestaltung wurden bereits beschrieben, da diese bei der Durchführung der Positionierung der Kathode vor der Bearbeitung sehr wichtig ist. Man kann das gleiche Ergebnis auch erreichen, indem die Spannvorrichtung bezüglich der Bearbeitungsachse bzw. der Symmetrieachse verfahr- oder verschwenkbar ist. Selbstverständlich umfasst die Erfindung auch eine Lösung, bei der sowohl die Kathode in der Vorrichtung als auch die Spannvorrichtung in der Vorrichtung bezüglich der Bearbeitungsachse verfahr- oder verschwenkbar sind.

Nach der Erfindung ist die Kathode im Wesentlichen nadelförmig ausgebildet. Ähnlich einer Großraummiene bei Kugelschreibern besitzt die Kathode an der dem zu bearbeitenden Werkstück zugewandten Seite eine Verjüngung, die insbesondere in ihrem Außendurchmesser deutlich geringer, insbesondere etwa halb so groß bemessen ist wie der Innendurchmesser der zu bearbeitenden Sackbohrung. Dem gegenüber besitzt der Durchmesser der Kathode im oberen Teil, das heißt an der dem Werkstück abgewandten Seite, in etwa den gleichen Außendurchmesser wie der Innendurchmesser der Sackbohrung.

Nach der Erfindung ist die Kathode aus einem elektrisch leitenden, korrosionsbeständigen Material gebildet. Bezüglich der Materialart gibt es allerdings keine weitere Einschränkung. Alle korrosionsbeständigen bzw. elektrisch leitenden Materialien eignen sich hierzu in besonderer Weise. Selbstverständlich ist dabei bevorzugt ein korrosionsbeständiger Stahl vorgesehen.

Selbstverständlich umfasst die erfindungsgemäße Vorrichtung auch Zu- bzw. Abflüsse für die Elektrolytflüssigkeit, elektrische Anschlüsse für die Kathode und die Anode sowie eine Stromversorgung. Die Vorrichtung nach der Erfindung ist demzufolge in etwa genauso aufgebaut wie üblicherweise Vorrichtungen für die elektrochemische Bearbeitung aufgebaut werden, nämlich mit den entsprechenden Zusatzaggregaten wie eingangs beschrieben.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

In der Zeichnung ist die Erfindung insbesondere in einem Ausführungsbeispiel schematisch dargestellt. Es zeigen:
- Fig. 1a bis 1e: Hauptbestandteile und Details der erfindungsgemäßen Vorrichtung zur Durchführung des erfindungsgemäßen Verfahrens,
- Fig. 2a und 2b: Werkstück und Prüfkörper nach der Erfindung,
- Fig. 3: schematische Darstellung einer Auswertegrafik nach der Erfindung und
- Fig. 4a bis 4d: Verfahrensablauf bei der Positionierung und/oder Zentrierung der Kathode zur Durchführung des Verfahrens nach der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

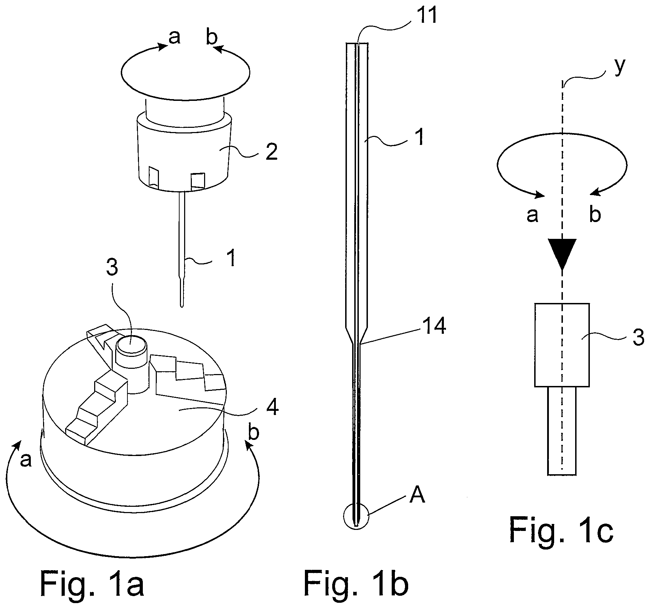

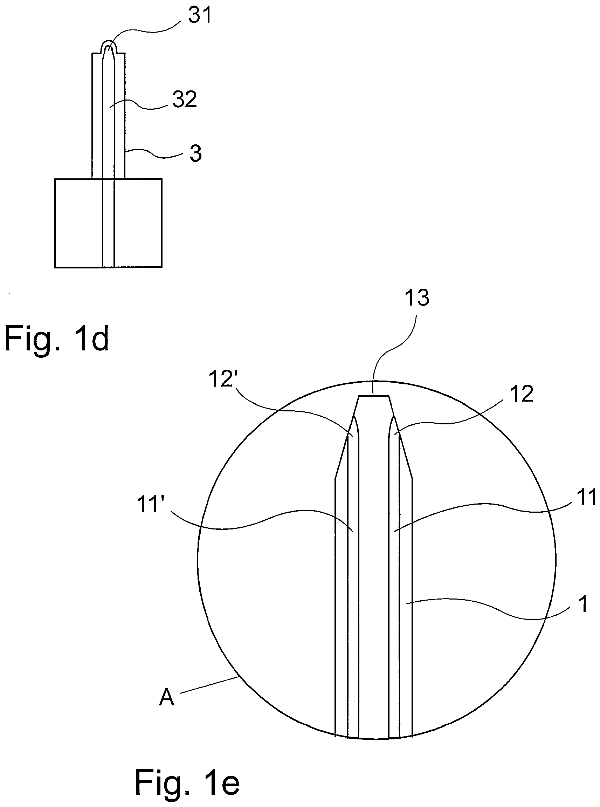

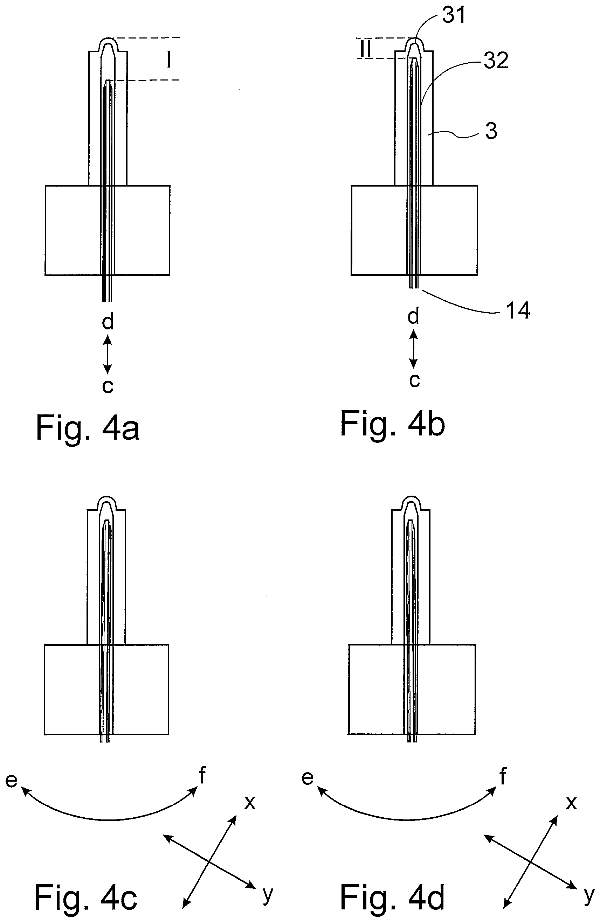

Die Figuren 1a bis 1e zeigen Hauptbestandteile und Details der erfindungsgemäßen Vorrichtung zur Durchführung des Verfahrens nach der Erfindung. In Fig. 1a ist dabei eine Kathode 1 gezeigt, die in einer Halterung 2 vorgesehen ist. Nach der Erfindung ist dabei entweder die Kathode 1 drehbar in der Halterung 2 gelagert oder aber, wie aus der schematischen Darstellung ersichtlich, auch die Halterung 2 in Richtung des kreisförmigen Doppelpfeils a,b drehbar. Dabei ist gewollt, dass die Halterung bzw. die Kathode sowohl in Richtung a, als auch in Richtung b drehbar ist. Die Kathode ist hier noch vor dem Positioniervorgang gezeigt. Im unteren Teil der Fig. 1a ist eine Spannvorrichtung 4 gezeigt, in der das Werkstück 3 zentrisch eingespannt ist. In der dargestellten Ausführungsform handelt es sich hierbei beispielsweise um ein Dreibackenfutter. Dabei ist auch hier günstigerweise vorgesehen, dass entweder die Halterung 2 in Richtung des Doppelpfeils a,b drehbar ist oder aber auch eine nicht gezeigte Ausführungsform, bei der das Werkstück in der Halterung selbst drehbar gelagert wird. Dies kann beispielsweise nach dem Spannvorgang erfolgen. Die Fig. 1b zeigt eine Kathode 1 nach der Erfindung. In der Kathode 1 ist ein Strömungskanal 11 zur Durchführung der Elektrolytflüssigkeit zur Spitze 13 der Kathode vorgesehen. Die Kathode 1 ist, wie ersichtlich, im unteren Teil, also dem Teil, der bei der Bearbeitung dem Werkstück 3 zugewandt ist, verjüngt. Die Verjüngungsstelle ist dabei mit dem Bezugszeichen 14 bezeichnet. Der Kreis, der mit A benannt ist, bezeichnet den Ausschnitt, der in Fig. 1e gezeigt ist. Das heißt, in Fig. 1e ist die Kathode aufgrund ihrer sehr geringen Größe vergrößert dargestellt. Das bedeutet, es betrifft den Teil der Kathode 1, der sich in Richtung auf das Werkstück 3 zugewandt in der Bearbeitungsstellung an dem stärkeren Ende der Kathode 1 anschließt. In der Fig. 1e ist demzufolge ersichtlich, dass die Kathode 1 zwei Strömungskanäle 11,11' aufweist. Die Austrittsöffnungen 12,12' treten nicht direkt an der Spitze 13 der Kathode 1 aus dieser aus, sondern an der kegelförmig ausgebildeten Spitze 13 seitlich. Dazu sind die Austrittsöffnungen 12,12' nach außen seitlich abgerundet, so dass sie nicht direkt geradlinig auf die bearbeitende Fläche auftreffen, sondern leicht abgewinkelt. Nicht ersichtlich sind in dieser Darstellung die Ausgestaltungen, wonach an der Oberfläche der Spitze 13, beginnend an den Austrittsöffnungen 12 Führungsnuten bzw. Führungsrillen vorgesehen sind. Diese dienen dazu, während des Bearbeitungsvorganges die Elektrolytflüssigkeit in den relativ engen Räumen zwischen Werkstück 3 und Kathode 1 zu leiten. Die Fig. 1c zeigt schematisch das Werkstück 3, wobei in dieser Darstellung angedeutet ist, dass die Kathode 1 in Richtung a,b drehbar ist. Des Weiteren wird angedeutet, dass in Richtung des Pfeiles entlang der Symmetrieachse y die Kathode zur Bearbeitung selbstverständlich in das Werkstück eingeführt und dort entsprechend positioniert und zentriert werden muss. Dies wird weiter hinten (Fig. 4a bis 4d) noch ausführlich beschrieben.

Die Fig. 1d zeigt ein zu bearbeitendes Werkstück 3. Das Werkstück 3 weist eine Sackbohrung 32 auf. Diese Sackbohrung 32 besitzt einen Düsensack 31, um dessen Bearbeitung es bei der Durchführung der erfindungsgemäßen Verfahrens eigentlich geht. Die Düse 30 ist kegelförmig auf der dem Düsensack 31 abgewandten Seite aufgeweitet. Gleiches gilt für die Sackbohrung 32, die ebenfalls an ihrem von dem Düsensack 31 abgewandten Ende kegelförmig aufgeweitet ist.

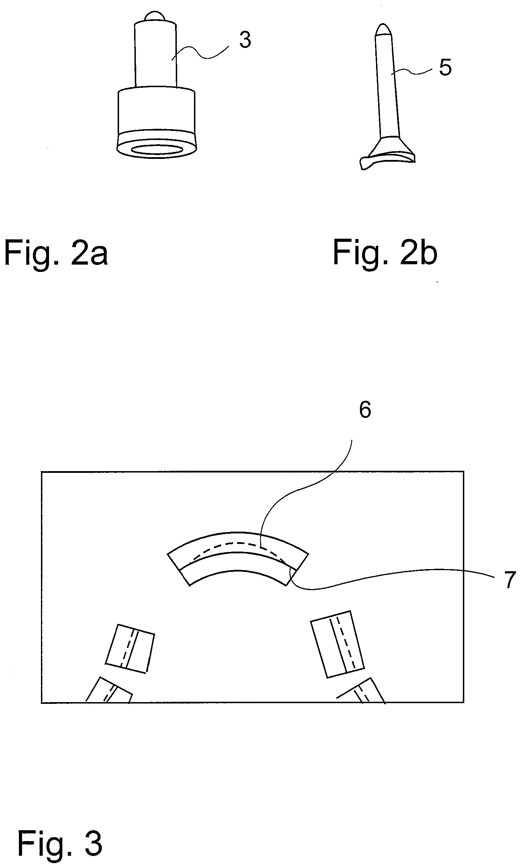

Die Fig. 2a und 2b zeigen in der Fig. 2a das Werkstück 3 nach der Erfindung in seiner äußeren Kontur als dreidimensionale Darstellung. In der Fig. 2b ist ein Prüfkörper 5 dargestellt, der so hergestellt wird, dass beispielsweise vor dem elektrochemischen Bearbeiten eine Schnellabformmasse, beispielsweise zur Anfertigung von Zahnabdrücken aus der Dentaltechnik, wie zum Beispiel Aginal in die Sackbohrung 32 gepresst wird und zwar so, dass diese vollständig ausgefüllt wird. Nach dem Abbinden bzw. Aushärten der Schnellabformmasse kann der Prüfkörper problemlos aus der Sackbohrung entnommen werden, ohne dass hierzu größere Kraftaufwendungen notwendig sind und insbesondere, ohne dass die Oberfläche der Sacklochbohrung in Mitleidenschaft gezogen wird. Dieser Prüfkörper 5 dient dann zum Vergleich mit einem zweiten, hier nicht dargestellten Prüfkörper, der nach der elektrochemischen Bearbeitung angefertigt wird. Man kann nun diese Prüfkörper 5 fotografisch oder anderweitig optisch überlagern und so zu einer Überprüfung des Bearbeitungsergebnisses gelangen. Das heißt, man vergleicht den Prüfkörper 5 vor dem elektrochemischen Bearbeiten mit dem Prüfkörper 5 nach dem elektrochemischen Bearbeiten, um die abgetragene Differenz feststellen zu können. Dies kann beispielsweise in Form einer Auswertegrafik, wie in Fig. 3 gezeigt, erfolgen. Diese Grafik kann allerdings auch anderweitig, beispielsweise durch Magnetfeldmesstechnik oder Ultraschalltechnik erzeugt werden. In der Linie 7, welche durchgezogen ist, ist dabei der zu bearbeitende Bereich des Düsensackes 31 vor dem Bearbeiten gezeigt. Die gestrichelte Linie 6 zeigt den Düsensack 31 nach der Bearbeitung. Klar ersichtlich ist hier ein nahezu kontinuierlicher Abtrag erfolgt. Die Linie 7 ist in der Regel nicht so glatt durchgezogen, sondern eher rissig und unregelmäßig. Dies war allerdings zeichnungstechnisch schlecht darstellbar.

Die Fig. 4a bis 4d zeigen den Verfahrensablauf bei der Positionierung und/oder Zentrierung der Kathode 1 zur Durchführung des Verfahrens nach der Erfindung. Die Kathode 1 wird, wie in Fig. 4a ersichtlich, in Richtung d in das Sackloch des Werkstücks 3 eingeführt. Dabei wird sie zunächst in einem Abstand I vorsichtig abgetastet, um sie dann, wie 1n Fig. 4b weiter dargestellt, weiter in Richtung des Düsensackes 31 zu bewegen. In einem Abstand II wird sie dann gegebenenfalls nochmals überprüft, bevor sie in ihre endgültige Lage für die elektrochemische Bearbeitung gebracht werden kann. Bevor allerdings diese endgültige Positionierung erfolgt, ist noch ein Verschwenken oder Verfahren der Kathode 1 oder aber des Werkstücks 3 abweichend von der Symmetrieachse notwendig und zwar so, dass die Kathode 1 die Sackbohrung 32 an der Innenfläche antastet, diese aber nicht beschädigt. Dazu ist entweder die Kathode 1 der das Werkstück 3 in Richtung e-f verschwenkbar und/oder in X-/Y-Richtung verfahrbar. Für den Bearbeitungsablauf ist es so, dass die Düsenkörper im Wesentlichen schon endbearbeitet zur elektrochemischen Bearbeitung geliefert werden, um dann nur noch die Düsensäcke 31 zu bearbeiten. Aus diesem Grund ist es wichtig, dass eine seitliche Berührung durch die Kathode an der Sackbohrung 32 nicht erfolgt. Für eine richtige Positionierung ist es allerdings wichtig, die Verschwenkbewegung Richtung e,f bezüglich des Düsensackes 31 durchzuführen, damit die Kathode 1 optimal für die elektrochemische Bearbeitung positioniert werden kann, um am Ende einen Düsensack 31 zu erhalten, der zentrisch elektrochemisch bearbeitet wird, so dass innerhalb der Düse beim bestimmungsgemäßen Einsatz derselben eine optimale Strömung gewährleistet wird.

## Patentansprüche

1. Verfahren zur elektrochemischen Bearbeitung von Werkstücken (3) mit einer Sackbohrung (32), wie zum Beispiel von Düsen, wobei eine Relativbewegung als Drehbewegung während der Bearbeitung zwischen Werkstück (3) und Kathode (1) vorgesehen ist, mit einer gleichsinnigen oder entgegengesetzten Drehrichtung von Kathode (1) und Werkzeug (3) **dadurch gekennzeichnet, dass** eine Elektrolytflüssigkeit in wenigstens einem in der Kathode (1) vorgesehenen Strömungskanal (11, 11') zur Kathodenspitze geleitet wird, wo sie seitlich in Richtung auf die zu bearbeitende Fläche ausgeleitet wird.

2. Verfahren nach Anspruch 1, **dadurch gekennzeichnet, dass** das Werkstück (3) mittels einer Spannvorrichtung (4) in einer Vorrichtung eingespannt und als Anode gepolt wird, wobei die Sackbohrung (32) zu einer der Kontur des Werkstückes (3) beziehungsweise der zu bearbeitenden Bohrung in etwa angepassten Kathode weist, die Kathode (1) anschließend in der Sackbohrung (32) zentriert und das Werkstück (3) und die Kathode (1) in eine Drehbewegung bei gleichzeitiger Beaufschlagung mit Elektrolytflüssigkeit und Strom versetzt wird/werden.

3. Verfahren nach einem der vorhergehenden Ansprüche, **dadurch gekennzeichnet, dass** die Elektrolytflüssigkeit seitlich an der Spitze (13) der insbesondere nadelförmigen Kathode (1) und bezogen auf die Symmetrieachse der Kathodenspitze (13) abgewinkelt auf die zu bearbeitende Fläche gelenkt und dort insbesondere gleichmäßig verteilt wird, die Elektrolytflüssigkeit auf den Sack der Sackbohrung (32) gelenkt wird, um eine Sackkopffläche zu bearbeiten, wobei die Kathode (1) und das Werkstück (3) mit einer Geschwindigkeit von 20 bis 40 Umdrehungen pro Minute gedreht werden.

4. Verfahren nach einem der vorhergehenden Ansprüche, **gekennzeichnet durch** eine Bearbeitungsdauer von 2 bis 30 Sekunden, bevorzugt von 5 Sekunden und/oder **dadurch, dass** die zu bearbeitende Fläche mit 30 bis 180 Ampere-Sekunden beaufschlagt wird.

5. Verfahren nach einem der vorhergehenden Ansprüche, **dadurch gekennzeichnet, dass** als Elektrolytflüssigkeit bevorzugt Natrium-Nitrat mit einer Konzentration von 5 bis 30 Prozent, bevorzugt von 20 Prozent verwendet wird und insbesondere bevorzugt ein Druck der Elektrolytflüssigkeit von 5 bis 10 Bar vorgesehen ist und/oder die zu bearbeitende Fläche alternativ oder zusätzlich durch elektrochemisches Senken und/oder elektrochemisches Polieren bearbeitet wird.

6. Verfahren nach einem der vorhergehenden Ansprüche, **dadurch gekennzeichnet, dass** eine optische Prüfung, bevorzugt durch optisches Abfahren, durchgeführt wird, um bei ggf. nicht ausreichendem Abtrag an der zu bearbeitenden Fläche eine erneute Bearbeitung mit ggf. angepassten Parametern durchzuführen.

7. Verfahren nach einem der vorhergehenden Ansprüche, **dadurch gekennzeichnet, dass** ein Prüfkörper (5) vom Inneren der Sackbohrung (32) vor der Bearbeitung und ein weiterer Prüfkörper (5) nach der Bearbeitung angefertigt werden und beide Prüfkörper (5) miteinander verglichen werden, um das Ergebnis der Bearbeitung zu beurteilen, wobei bevorzugt zur Anfertigung des Prüfkörpers (5) eine Schnellabformmasse zur Anfertigung von Zahnabdrücken aus der Dentaltechnik, wie zum Beispiel Aginal, verwendet wird, insbesondere bevorzugt eine Prüfung mittels Magnetfeldmesstechnik oder Ultraschalltechnik vor und nach der Bearbeitung durchgeführt wird, um das Ergebnis der Bearbeitung zu beurteilen.

8. Verfahren nach einem der vorhergehenden Ansprüche, **dadurch gekennzeichnet, dass** zur Zentrierung die Kathode (1) durch Annäherung nahe bei dem Sackloch der Düse positioniert wird und durch ein seitliches Verschwenken bezüglich der Symmetrieachse der Sackbohrung angenähert wird, sodass die Kathode (1) für die Bearbeitung optimal, insbesondere zentrisch positioniert wird, wobei die Kathode (1) entweder bereits bei Beginn des Zentriervorgangs, spätestens jedoch nach Beendigung der Zentrierung mit Elektrolytflüssigkeit beaufschlagt wird.

9. Vorrichtung zur elektrochemischen Bearbeitung von Werkstücken mit einer Sackbohrung, wie zum Beispiel von Düsen, zur Durchführung des Verfahrens nach einem der vorhergehenden Ansprüche, wobei die in einer Halterung (2) drehbar gelagerte Kathode (1) und eine drehbar gelagerte Spannvorrichtung (4) für das zu bearbeitende Werkstück (3) mit wenigstens einem Antrieb vorgesehen sind, der die Halterung (2) mit der Kathode (1) und die Spannvorrichtung (4) mit dem Werkstück (3) in einer gleichsinnigen oder gegensinnigen Drehbewegung antreiben kann, **dadurch gekennzeichnet, dass** der zumindest eine Strömungskanal (11, 11') so ausgeformt ist, dass eine Elektrolytflüssigkeit in dem wenigstens einen Strömungskanal (11, 11') zur Kathodenspitze (13) leitbar ist, um seitlich in Richtung auf die zu bearbeitende Fläche ausgeleitet zu werden.

10. Vorrichtung nach Anspruch 9, **dadurch gekennzeichnet, dass** Kathode (1) und/oder Spannvorrichtung (4) linear aufeinander zu bzw. voneinander wegbewegbar sind.

11. Vorrichtung nach einem der vorhergehenden Ansprüche 9 und 10, **dadurch gekennzeichnet, dass** im Inneren der Kathode (1) wenigstens ein Strömungskanal (11) für die Elektrolytflüssigkeit mit wenigstens einer Austrittsöffnung (12) an der Spitze (13) der Kathode (1) bzw. an der dem zu bearbeitenden Werkstück (3) zugewandten Seite vorgesehen ist.

12. Vorrichtung nach einem der vorhergehenden Ansprüche 9 bis 11, **dadurch gekennzeichnet, dass** die wenigstens eine Austrittsöffnung (12) bezüglich der Symmetrieachse (y) der Kathode (1) nach außen weisend, abgewinkelt vorgesehen ist.

13. Vorrichtung nach einem der vorhergehenden Ansprüche 9 bis 12, **dadurch gekennzeichnet, dass** an jeder der Austrittsöffnungen (12, 12') für die Elektrolytflüssigkeit an der Spitze (13) der Kathode (1) Führungsnuten bzw. Rillen vorgesehen sind, die den Elektrolytfluss auf die zu bearbeitende Werkstückfläche lenken und/oder dort verteilen.

14. Vorrichtung nach einem der vorhergehenden Ansprüche 9 bis 13, **dadurch gekennzeichnet, dass** die Kathode (1) bzw. die Halterung (2) in der Vorrichtung bezüglich der Bearbeitungsachse bzw. der Symmetrieachse (y) der Sackbohrung (32) im Werkstück (3) verschwenkbar ist und/oder die Spannvorrichtung (4) in der Vorrichtung bezüglich der Bearbeitungsachse bzw. der Symmetrieachse (y) der Sackbohrung (32) im Werkstück (3) verschwenkbar ist.

15. Vorrichtung nach einem der vorhergehenden Ansprüche 9 bis 14, **dadurch gekennzeichnet, dass** an der Kathode (1) an der dem zu bearbeitenden Werkstück (3) zugewandten Seite eine Verjüngung (14) vorgesehen ist, die insbesondere in ihrem Außendurchmesser deutlich geringer, insbesondere etwa halb so groß, bemessen ist wie der Innendurchmesser der Sackbohrung (32) , wobei bevorzugt der Durchmesser der Kathode (1) im oberen Teil, das heißt an der dem Werkstück (3) abgewandten Seite, in etwa den gleichen Außendurchmesser aufweist, wie der Innendurchmesser der Sackbohrung (32) und/oder die Kathode (1) aus einem elektrisch leitenden, korrosionsbeständigen Material gebildet ist und Zu- bzw. Abflüsse für die Elektrolytflüssigkeit, elektrische Anschlüsse für die Kathode und die Anode sowie eine Stromversorgung vorgesehen sind.

## Claims

1. Method for the electrochemical machining of work pieces (3), such as, for example, nozzles, in particular with a blind hole (32), wherein a relative movement as a rotary movement is provided during the machining between work piece (3) and cathode (1), with a rotary direction of cathode (1) and tool (3) in the same or opposite direction, **characterized in that** an electrolyte liquid is conducted to the tip of the cathode in at least one flow channel (11, 11') provided in the cathode (1), where it is channeled out on the side in the direction to the surface to be machined.

2. Method according to claim 1, **characterized in that** the work piece (3) is clamped by means of a clamping device (4) in a device and poled as anode, wherein the blind hole (32) points to a cathode roughly adapted to the contour of the work piece (3) or the hole to be machined, after that the cathode (1) is centered in the blind hole (32), and the work piece (3) and the cathode (1) are set in a rotary motion while at the same time electrolyte liquid and current is/are applied.

3. Method according to one of the preceding claims, **characterized in that** the electrolyte liquid is guided, on the side at the tip (13) of the in particular pin-shaped cathode (1) and bent with reference to the symmetric axis of the cathode tip (13), to the surface to be machined and is spread there in particular evenly, the electrolyte liquid is guided to the bottom of the blind hole (32), in order to machine a blind hole head surface, wherein the cathode (1) and the work piece (3) rotate with a speed of 20 to 40 rotations per minute.

4. Method according to one of the preceding claims, **characterized by** a machining period of 2 to 30 seconds, preferably 5 seconds, and/or in that the surface to be machined is impinged with 30 to 180 ampere seconds.

5. Method according to one of the preceding claims, **characterized in that** as an electrolyte liquid preferably sodium nitrate in a concentration of 5 to 30 percent, preferably 20 percent is used, and in particular a pressure of the electrolyte liquid of 5 to 10 bars is provided, and/or the surface to be machined is machined alternatively or additionally by electrochemical machining and/or electrochemical polishing.

6. Method according to one of the preceding claims, **characterized in that** an optical inspection, preferably by optical scanning is performed in order to machine again, if necessary, with adapted parameters, if the reduction at the surface to be machined has not been satisfying.

7. Method according to one of the preceding claims, **characterized in that** a test specimen (5) of the interior of the blind hole (32) is manufactured before machining, and another test specimen (5) after machining, and both test specimens (5) are compared to each other to evaluate the result of the machining, wherein for manufacturing the test specimen (5), preferably a quick molding compound for manufacturing dental imprints from dental technology, such as, for example, Aginal, is used, in particular preferably a testing is performed by means of magnetic field measuring technology or ultrasound technology before and after machining in order to evaluate the result.

8. Method according to one of the preceding claims, **characterized in that** for centering, the cathode (1) is positioned by approximation close to the blind hole of the nozzle, and is approached by lateral swiveling with reference to the symmetric axis of the blind hole, so that the cathode (1) is positioned perfectly for machining, in particular centered, wherein the cathode (1) is impinged with electrolyte liquid either already at the beginning of the centering operation, or at the latest after the end of the centering.

9. Device for the electrochemical machining of work pieces, such as, for example, nozzles, preferably with a blind hole, for performing the method according to one of the preceding claims, wherein the cathode (1) rotatably supported on bearings in a holding device (2), and a clamping device (4) rotatably supported on bearings for the work piece (3) to be machined are provided with at least one drive that can drive the holding device (2) along with the cathode (1) and the clamping device (4) along with the work piece (3) in a rotation in the same or opposite direction, **characterized in that** the at least one flow channel (11, 11') is formed such that an electrolyte liquid can be conducted to the tip (13) of the cathode in the at least one flow channel (11, 11'), where it is channeled out on the side in the direction to the surface to be machined.

10. Device according to claim 9, **characterized in that** the cathode (1) and/or clamping device (4) can be moved linearly towards each other or away from each other.

11. Method according to one of the preceding claims 9 and 10, **characterized in that** in the interior of the cathode (1), at least one flow channel (11) for the electrolyte liquid is provided having at least one outlet (12) at the tip (13) of the cathode (1) or the side facing the work piece (3) to be machined.

12. Method according to one of the preceding claims 9 to 11, **characterized in that** the at least one outlet (12) is provided pointing outwards, bent with reference to the symmetric axis (y) of the cathode (1).

13. Device according to one of the preceding claims 9 to 12, **characterized in that** at each of the outlets (12, 12') for the electrolyte liquid, guiding grooves or flutes are provided at the tip (13) of the cathode (1) guiding the flow of the electrolyte to and/or spreading it on the work piece (3) surface to be machined.

14. Method according to one of the preceding claims 9 to 13, **characterized in that** the cathode (1) or the holding device (2) can be swiveled in the device with reference to the machining axis or the symmetric axis (y) of the blind hole (32) in the work piece (3), and/or the clamping device (4) can be swiveled in the device with reference to the machining axis or the symmetric axis (y) of the blind hole (32) in the work piece (3).

15. Device according to one of the preceding claims 9 to 14, **characterized in that** at the cathode (1) on the side facing the work piece (3) to be machined, a tapering (14) is provided whose exterior diameter, in particular, is clearly smaller than the interior diameter of the blind hole (32), in particular half as large, wherein preferably the diameter of the cathode (1) has in the top part, that is at the side opposite the work piece (3), roughly the same exterior diameter as the interior diameter of the blind hole (32), and/or the cathode (1) is formed from an electrically conducting, corrosion-resistant material, and inlets and outlets for the electrolyte liquid, electrical connections for the cathode and the anode as well a power supply are provided.

## Revendications

1. Procédé pour usinage électrochimique de pièces (3) à usiner avec un trou borgne (32), comme par exemple des buses, dans lequel un déplacement relatif est prévu en tant que déplacement de rotation pendant l'usinage entre pièce (3) à usiner et cathode (1), la cathode (1) et l'outil (3) ayant un sens de rotation identique ou opposé, **caractérisé en ce qu'**un liquide électrolyte est acheminé dans au moins un canal d'écoulement (11, 11') prévu dans la cathode (1) en direction de la pointe de la cathode, où il est dévié latéralement en direction de la surface à usiner.

2. Procédé selon la revendication 1, **caractérisé en ce que** la pièce (3) à usiner est enserrée dans un dispositif au moyen d'un dispositif de serrage (4) et est polarisée en tant qu'anode, dans lequel le trou borgne (32) pointe en direction d'une cathode adaptée approximativement au contour de la pièce (3) à usiner ou de l'alésage à usiner, la cathode (1) est centrée ensuite dans le trou borgne (32) et la pièce (3) à usiner et la cathode (1) sont amenées dans un déplacement de rotation tout en étant soumises simultanément à l'action du liquide électrolytique et du courant.

3. Procédé selon l'une quelconque des revendications précédentes, **caractérisé en ce que** le liquide électrolytique est dirigé sur la surface à usiner latéralement contre la pointe (13) de la cathode (1) présentant notamment une forme d'aiguille et de manière coudée par rapport à l'axe de symétrie de la pointe de cathode (13) et y est réparti notamment de manière homogène, le liquide électrolytique est dirigé sur le fond du trou borgne (32) afin d'usiner une surface de tête de fond, dans lequel la cathode (1) et la pièce (3) à usiner sont mises en rotation à une vitesse allant de 20 à 40 tours par minute.

4. Procédé selon l'une quelconque des revendications précédentes, **caractérisé par** une durée d'usinage allant de 2 à 30 secondes, de manière préférée de 5 secondes, et/ou en ce que la surface à usiner est soumise à 30 à 180 ampères-seconde.

5. Procédé selon l'une quelconque des revendications précédentes, **caractérisé en ce qu'**est utilisé en tant que liquide électrolytique de manière préférée du nitrate de sodium avec une concentration allant de 5 à 30 pourcents, de manière préférée de 20 pourcents, et notamment de manière préférée une pression du liquide électrolytique de 5 à 10 bar est prévue, et/ou la surface à usiner est usinée en variante ou en supplément par une immersion électrochimique et/ou un polissage électrochimique.

6. Procédé selon l'une quelconque des revendications précédentes, **caractérisé en ce qu'**un contrôle visuel est effectué de manière préférée par un balayage visuel afin d'effectuer, en présence éventuellement d'un enlèvement de matière insuffisant, au niveau de la surface à usiner, un nouvel usinage avec des paramètres éventuellement adaptés.

7. Procédé selon l'une quelconque des revendications précédentes, **caractérisé en ce qu'**un corps de contrôle (5) est produit depuis l'intérieur du trou borgne (32) avant l'usinage et un autre corps de contrôle (5) est produit après l'usinage, et les deux corps de contrôle (5) sont comparés l'un à l'autre afin d'évaluer le résultat de l'usinage, dans lequel une matière à démoulage rapide servant à produire des empreintes dentaires issues des techniques dentaires, comme par exemple l'Aginal, est utilisée de manière préférée afin de produire le corps de contrôle (5), notamment de manière préférée un contrôle est effectué au moyen d'une technique de mesure de champ magnétique ou d'une technique à ultrasons avant et après l'usinage afin d'évaluer le résultat de l'usinage.

8. Procédé selon l'une quelconque des revendications précédentes, **caractérisé en ce que** la cathode (1) est positionnée en la rapprochant à proximité du trou borgne de la buse aux fins du centrage et est rapprochée par un pivotement latéral par rapport à l'axe de symétrie du trou borgne de sorte que la cathode (1) est positionnée pour l'usinage de manière optimale, notamment de manière centrée, dans lequel la cathode (1) est soumise dès le début de l'opération de centrage, ou au plus tard après la finalisation du centrage, à l'action du liquide électrolytique.

9. Dispositif pour usinage électrochimique de pièces avec un trou borgne, comme par exemple des buses, pour la mise en oeuvre du procédé selon l'une quelconque des revendications précédentes, dans lequel la cathode (1) montée de manière à pouvoir tourner dans un support (2) et un dispositif de serrage (4) monté de manière à pouvoir tourner pour une pièce (3) à usiner avec au moins un entraînement sont prévus, qui peut entraîner le support (2) avec la cathode (1) et le dispositif de serrage (4) avec la pièce (3) à usiner, dans un déplacement en rotation dans le même sens ou dans le sens inverse, **caractérisé en ce que** ledit au moins un canal d'écoulement (11, 11') est formé de sorte qu'un liquide électrolytique peut être acheminé dans ledit au moins un canal d'écoulement (11, 11') en direction de la pointe de cathode (13), où il est dévié latéralement en direction de la surface à usiner.

10. Dispositif selon la revendication 9, **caractérisé en ce que** la cathode (1) et/ou le dispositif de serrage (4) peuvent être déplacés l'un vers l'autre de manière linéaire et/ou de manière à s'éloigner l'un de l'autre de manière linéaire.

11. Dispositif selon l'une quelconque des revendications précédentes 9 et 10, **caractérisé en ce qu'**au moins un canal d'écoulement (11) pour le liquide électrolytique avec au moins une ouverture de sortie (12) à la pointe (13) de la cathode (1) ou dans le côté tourné vers la pièce (3) à usiner est prévu à l'intérieur de la cathode (1).

12. Dispositif selon l'une quelconque des revendications précédentes 9 à 11, **caractérisé en ce que** ladite au moins une ouverture de sortie (12) est prévue de manière coudée en pointant vers l'extérieur par rapport à l'axe de symétrie (y) de la cathode (1).

13. Dispositif selon l'une quelconque des revendications précédentes 9 à 12, **caractérisé en ce que** sont prévues, à chaque ouverture de sortie (12, 12') pour le liquide électrolytique, à la pointe (13) de la cathode (1), des rainures de guidage ou des sillons de guidage, qui dirigent le flux électrolytique sur la surface de pièce à usiner et/ou l'y répartissent.

14. Dispositif selon l'une quelconque des revendications précédentes 9 à 13, **caractérisé en ce que** la cathode (1) ou le support (2) peut être pivoté dans le dispositif par rapport à l'axe d'usinage ou à l'axe de symétrie (y) du trou borgne (32) dans la pièce (3) à usiner, et/ou le dispositif de serrage (4) peut être pivoté dans le dispositif par rapport à l'axe d'usinage ou à l'axe de symétrie (y) du trou borgne (32) dans la pièce (3) à usiner.

15. Dispositif selon l'une quelconque des revendications 9 à 14, **caractérisé en ce qu'**est prévu, sur la cathode (1) sur le côté tourné vers la pièce (3) à usiner, un rétrécissement (14), qui notamment dans son diamètre extérieur est nettement moins grand, notamment approximativement deux fois moins grand que le diamètre intérieur du trou borgne (32), dans lequel de manière préférée le diamètre de la cathode (1) présente, dans la partie supérieure, c'est-à-dire sur le côté éloigné de la pièce (3) à usiner, approximativement le même diamètre extérieur que le diamètre intérieur du trou borgne (32), et/ou la cathode (1) est formée d'un matériau électro-conducteur, résistant à la corrosion, et des entrées ou sorties pour le liquide électrolytique, des raccords électriques pour la cathode et l'anode ainsi qu'une alimentation en courant sont prévus.
